# EUROPÄISCHE PATENTSCHRIFT

(11) **EP 3 068 586 B1**
(45) Veröffentlichungstag und Bekanntmachung des Hinweises auf die Patenterteilung: **26.10.2022**
(21) Anmeldenummer: 14796086.8
(22) Anmeldetag: 10.11.2014
(51) Int. Cl.: B24B 41/00

(54) **OSZILLIEREND ANTREIBBARE WERKZEUGMASCHINE**
OSCILLATORILY DRIVEN MACHINE TOOL
MACHINE-OUTIL À ENTRAÎNEMENT OSCILLANT

(30) Priorität: 13.11.2013 DE 102013112455
(43) Veröffentlichungstag der Anmeldung: 21.09.2016
(73) Patentinhaber: C. & E. Fein GmbH, 73529 Schwäbisch Gmünd-Bargau (DE)
(72) Erfinder: GEITNER, Richard E., 73431 Aalen (DE); NOACK, Steffen, 09633 Halsbrücke (DE)
(74) Vertreter: Wallinger Ricker Schlotter Tostmann
(86) Internationale Anmeldenummer: PCT/EP2014/074126
(87) Internationale Veröffentlichungsnummer: WO 2015/071204

(56) Entgegenhaltungen:
- EP-A1- 0 248 986
- DE-A1- 10 210 756
- DE-A1-102009 055 843
- DE-U1-202008 013 877
- GB-A- 567 549
- RU-C1- 2 074 083

## Beschreibung

Die Erfindung betrifft eine oszillierend antreibbare Werkzeugmaschine mit einem Antriebsmotor und mit einer um ihre Längsachse schwenkbar gelagerten Werkzeugspindel, die drehoszillierend um ihre Längsachse antreibbar ist.

Derartige oszillierend antreibbare Werkzeugmaschinen sind in vielfältiger Ausführung bekannt. Sie werden über ein mechanisches Oszillationsgetriebe angetrieben, das die rotierende Antriebsbewegung eines Antriebsmotors in eine drehoszillierende Antriebsbewegung der Werkzeugspindel um ihre Längsachse umsetzt.

Gemäß der EP 1 428 625 A1 ist hierzu ein Exzenter vorgesehen, der mit einer Exzentergabel zum oszillierenden Antrieb der Werkzeugspindel zusammenwirkt. Der Exzenter wird von einer Exzenterwelle rotierend angetrieben, die parallel zur Werkzeugspindel angeordnet ist.

Gemäß der EP 2 283 979 A1 weist eine oszillierend antreibbare Werkzeugmaschine einen Antriebsmotor mit einer Motorwelle auf, sowie eine Werkzeugspindel, die um ihre Längsachse drehoszillierend antreibbar ist, wobei ein durch die Motorwelle rotatorisch antreibbares Koppelglied mit einer geschlossenen Führungsfläche vorgesehen ist, die eine Führungsachse umläuft, wobei die Führungsfläche über Übertragungsmittel mit mindestens einem Mitnehmer zu dessen Antrieb gekoppelt ist, wobei der mindestens eine Mitnehmer relativ zur Arbeitsspindel beweglich gehalten ist und in einem Umfangsbereich der Arbeitsspindel angreift, um diese drehoszillierend anzutreiben.

Derartige mechanische Oszillationsgetriebe gibt es in zahlreichen Ausführungen, um die rotierende Antriebsbewegung einer Motorwelle in die drehoszillierende Bewegung der Werkzeugspindel umzusetzen.

Wegen der ständig zunehmenden Anforderungen an die Leistungsfähigkeit der Oszillationswerkzeuge werden hierbei an die mechanischen Oszillationsgetriebe hohe Anforderungen gestellt. Sie sind infolge der oszillierenden Belastung einer hohen mechanischen Beanspruchung und damit tendenziell einem Verschleiß im Langzeitbetrieb ausgesetzt. Bei hoher Belastung nimmt außerdem die Geräuschentwicklung zu. Schließlich führen Oszillationsgetriebe je nach Belastung zu mehr oder minder großen Vibrationen, was teilweise vom Benutzer als nachteilig empfunden wird.

Aus der GB 567 549 A ist eine Werkzeugmaschine bekannt, die eine Hydraulikeinrichtung umfasst, über die der Antriebsmotor mit der Werkzeugspindel gekoppelt ist. Hierdurch wird die Werkzeugspindel um ihre Längsachse drehoszillierend angetrieben. Zudem ist hierbei ein Hydraulikgenerator vorgesehen, der einen oszillierenden Fluidstroms erzeugt. Mittels eines Hydraulikmotors wird die Hydraulikenergie in eine oszillierende Antriebsbewegung der Werkzeugspindel umgesetzt. Bei der bekannten Werkzeugmaschine ist ein Drehflügelmotor vorgesehen, der von einem Hydraulikgenerator mit oszillierender Fluidenergie versorgt wird, um eine Werkzeugspindel oszillierend anzutreiben, an der ein Schneidkopf vorgesehen ist. Die GB 567 549 A bildet die Basis für den Oberbegriff des Anspruchs 1.

Aus der EP 0 248 986 A 1 und der DE 102 10 756 A 1 sind weitere Drehflügelmotoren zur Erzeugung von oszillierenden Antriebsbewegungen bekannt.

Aus der RU 2074083 C1 ist eine stationäre Werkzeugmaschine bekannt, bei der die oszillierende Bewegung des Antriebsmotors über eine Hydraulikeinrichtung auf einen Werkzeugkopf übertragen wird, um diesen ebenfalls oszillierend anzutreiben.

Zudem ist auch bei der RU 2074083 C1 ein Hydraulikgenerator vorgesehen, der einen oszillierenden Fluidstroms erzeugt, und mit einem Hydraulikmotor den Werkzeugkopf oszillierend anzutreiben. Bei der bekannten Werkzeugmaschine ist der Arbeitskopf von dem Antriebsmotor und dem Hydraulikmotor entkoppelt, um die Vibrationen im Werkzeugkopf zu reduzieren.

Vor diesem Hintergrund liegt der Erfindung die Aufgabe zugrunde, eine oszillierend antreibbare Werkzeugmaschine mit einem Hydraulikantrieb derart zu verbessern, dass ein möglichst vibrationsarmer drehoszillierender Antrieb der Werkzeugspindel auch bei hoher mechanischer Belastung auf möglichst einfache und zuverlässige Weise ermöglicht ist.

Diese Aufgabe wird durch eine oszillierend antreibbare Werkzeugmaschine mit den Merkmalen des Anspruchs 1 gelöst.

Die Aufgabe der Erfindung wird auf diese Weise gelöst.

Indem eine Hydraulikeinrichtung zum drehoszillierenden Antrieb der Werkzeugspindel verwendet wird, werden höhere Antriebsleistungen als bei mechanischen Oszillationsgetrieben ermöglicht, wobei teilweise gleichzeitig der Verschleiß reduziert werden kann und die Laufruhe verbessert werden kann. Gleichzeitig wird durch die Ausgestaltung des Antriebselementes als Ausgleichsgewicht oder durch die Verwendung eines separaten Ausgleichsgewichts mit gegenläufiger Bewegung ein besonders vibrationsarmer Antrieb gewährleistet.

Ein besonderer Vorteil der obigen Anordnung besteht darin, dass durch die jeweilige Dimensionierung der Hydraulikeinrichtung die wesentlichen Parameter des oszillierenden Antriebes angepasst werden können, also insbesondere der Schwingwinkel, die Winkelgeschwindigkeit, die Winkelbeschleunigung und das erzeugte Drehmoment. Insbesondere lassen sich hohe Drehmomente relativ verschleißarm und vibrationsarm erzielen.

Aus der DE 20 2008 013 877 U1 ist es zwar bekannt, einen oszillierenden Fluidstrom nach dem Verdrängerprinzip mithilfe einer speziellen rotierenden kugelsegmentförmigen Fluiderzeugungsvorrichtung zu erzeugen. Der oszillierende Fluidstrom wird über einen doppelt wirkenden Fluidzylinder in einen hin und her oszillierenden Längshub eines Werkzeugs umgesetzt.

Aus der DE 20 2012 101 137 U1 ist ferner eine hydraulische Drehantriebsvorrichtung bekannt, bei der ein oszillierender Fluidstrom mithilfe einer speziellen rotierenden kugelsegmentförmigen Fluiderzeugungsvorrichtung erzeugt wird. Der oszillierende Fluidstrom dient zum Antrieb eines Hydro-Drehstellglieds mit außen liegendem Rotor, mit dem eine externe Einrichtung in Form eines Flügels oder einer Flosse angetrieben wird.

Durch die vorbekannten hydraulischen Antriebsvorrichtungen ist die erfindungsgemäße Werkzeugmaschine jedoch nicht nahegelegt, da die Antriebsvorrichtungen nicht für oszillierend antreibbare Werkzeugmaschinen geeignet sind, bei denen die Werkzeugspindel drehoszillierend um ihre Längsachse angetrieben wird.

Gemäß einer weiteren Ausgestaltung der Erfindung weist der Hydraulikgenerator eine Verdrängerpumpe auf.

Mit einer derartigen Ausgestaltung sind keine Ventile im Leistungsfluss erforderlich. Des Weiteren kann die Übersetzung dem gewünschten Bedarf angepasst werden. Es ergeben sich eine geringe Wärmeentwicklung und ein hoher Wirkungsgrad.

Vorzugsweise ist die Verdrängerpumpe als Kolbenpumpe oder als Plungerpumpe ausgebildet. Weiter bevorzugt ist eine Ausgestaltung der Hydraulikpumpe als Doppelkolbenpumpe oder als Doppelplungerpumpe.

Mit einer derartigen Ausgestaltung der Hydraulikpumpe kann diese symmetrisch angeordnet werden, so dass sich ein besonders ruhiger und gleichmäßiger Lauf ergibt, der besonders geeignet ist zur vibrationsarmen Erzeugung einer Oszillationsbewegung der Werkzeugspindel. Bei einer Ausgestaltung als Doppelkolben- oder Doppelplungerpumpe kann auf eine zusätzliche mechanische Rückstellung (etwa über ein Federelement) verzichtet werden, was bei einer einfachen Ausgestaltung notwendig wäre.

Gemäß einer weiteren Ausgestaltung der Erfindung ist der Antriebsmotor als Elektromotor ausgebildet, dessen Motorwelle über einen Exzenter mit der Hydraulikpumpe zur Erzeugung eines oszillierenden Fluidstroms gekoppelt ist.

Auf diese Weise wird eine sehr effektive Umsetzung von einer Rotationsbewegung der Motorwelle in eine Oszillationsbewegung des Hydraulikgenerators zur Erzeugung eines oszillierenden Fluidstroms ermöglicht.

Gemäß einer weiteren Ausgestaltung der Erfindung ist der Hydraulikmotor als Drehflügel-Schwenkmotor (Drehflügelmotor) ausgebildet, der mit der Werkzeugspindel zu deren oszillierendem Antrieb gekoppelt ist.

Ein derartiger Drehflügelmotor ist besonders gut geeignet, um eine Oszillationsbewegung der Werkzeugspindel mit begrenztem Drehwinkel direkt ohne zusätzliches Getriebe zu erzeugen.

In bevorzugter Ausgestaltung ist hierbei der Drehflügelmotor als Mehrkammer-Schwenkmotor mit mindestens vier Kammern ausgebildet ist.

Dies hat den Vorteil, dass der Motor symmetrisch aufgebaut werden kann, so dass einseitige Lagerbelastungen (in Querrichtung) vermieden werden können.

Gemäß einer weiteren Ausgestaltung der Erfindung ist die Werkzeugspindel über ein Getriebe, vorzugsweise in Form einer Schubschleife, mittels eines doppelt wirkenden Zylinders vom oszillierenden Fluidstrom angetrieben.

Auch mit einer derartigen Ausführung kann die Energie des oszillierenden Fluidstroms in geeigneter Weise in eine oszillierende Bewegung der Werkzeugspindel um ihre Längsachse umgesetzt werden. Wenn das Getriebe als Schubschleife ausgeführt wird, kann eine symmetrische Ausgestaltung erzielt werden.

Grundsätzlich wäre auch eine Ausführung mit einer Zahnstange als Getriebe zwischen Zylinder (Linearbewegung) und Werkzeugspindel (Oszillation) denkbar. Jedoch wäre dies ungünstiger als eine Ausgestaltung als Schubschleife.

Vorzugsweise ist das Arbeitselement als Doppelplunger oder als Doppelkolben ausgebildet.

Gemäß einer weiteren Ausgestaltung der Erfindung ist zum Antrieb des Ausgleichsgewichts ein weiterer Hydraulikgenerator vorgesehen, um das Ausgleichsgewicht mit oszillierender Fiuidenergie zu versorgen.

Da ein gesonderter Antrieb für das Ausgleichsgewicht vorgesehen ist, kann dieses optimal auf eine Vibrationsreduzierung abgestimmt werden.

Gemäß einer weiteren Ausgestaltung der Erfindung weist die Hydraulikeinrichtung einen geschlossenen Hydraulikkreis auf.

Eine derartige Ausgestaltung ist besonders für eine Verwendung als handgeführte Werkzeugmaschine geeignet.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen, der durch die anhängenden Ansprüche festgelegt ist.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine perspektivische Ansicht einer erfindungsgemäßen oszillierend antreibbaren Werkzeugmaschine in stark vereinfachter Darstellung ohne das zugehörige Gehäuse;
- Fig. 2: eine Prinzipdarstellung eines Drehflügelmotors, der zur direkten Umsetzung von oszillierender Fluidenergie in eine oszillierende Antriebsbewegung einer Werkzeugspindel geeignet ist;
- Fig. 2a: eine gegenüber der Ausführung gemäß Fig. 2 abgewandelte Ausführung eines erfindungsgemäßen Drehflügelmotors;
- Fig. 3: eine Prinzipdarstellung einer Schubschleife mit einem doppelt wirkenden Zylinder zur Umsetzung der Antriebsbewegung des Zylinders in eine oszillierende Antriebsbewegung einer Werkzeugspindel;
- Fig. 3a: eine gegenüber der Ausführung gemäß Fig. 3 leicht abgewandelte Ausführung einer Schubschleife;
- Fig. 4: ein Prinzipschaltbild einer Hydraulikeinrichtung mit einer Doppelkolbenpumpe zur Erzeugung eines oszillierenden Fluidstroms und mit einem Hydraulikmotor zur Umsetzung des oszillierenden Fluidstroms in eine oszillierende Antriebsbewegung einer Werkzeugspindel und
- Fig. 5: einen Schnitt durch die Werkzeugmaschine gemäß Fig. 1, bei der eine rotatorische Antriebsbewegung einer Motorwelle über einen Exzenter zum Antrieb einer Doppelplungerpumpe genutzt wird, die die Werkzeugspindel unmittelbar über einen Schwenkflügelmotor antreibt.

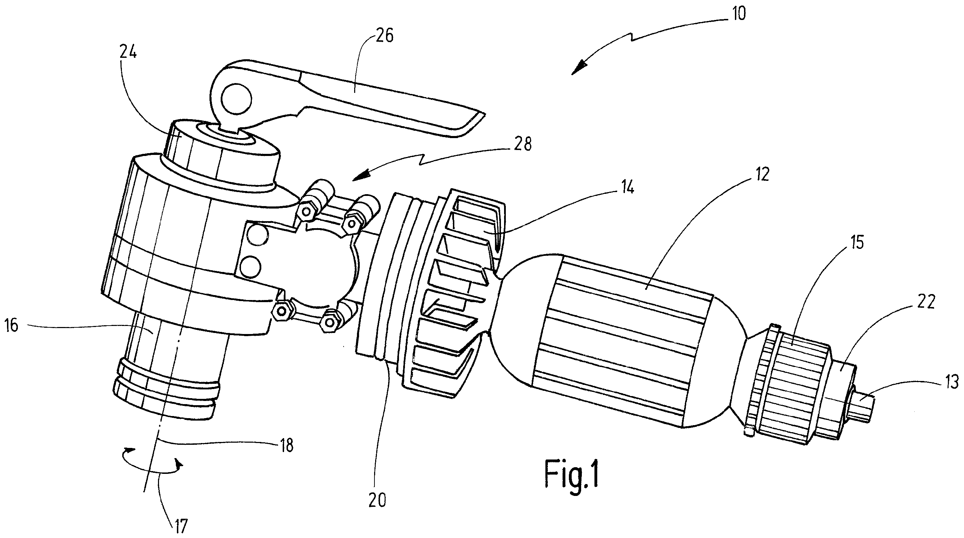

In Fig. 1 ist eine mögliche Ausführung einer erfindungsgemäßen oszillierend antreibbaren Werkzeugmaschine dargestellt und insgesamt mit der Ziffer 10 bezeichnet. Es handelt sich hierbei lediglich um eine Darstellung rein schematischer Natur mit den wesentlichen Komponenten, wobei auf die Darstellung des Gehäuses aus Vereinfachungsgründen verzichtet wurde,

Die Werkzeugmaschine 10 weist eine Werkzeugspindel 16 auf, die in grundsätzlich bekannter Weise im Gehäuse (nicht dargestellt) mittels Lagern (nur ein Lager 24 dargestellt) um ihre Längsachse 18 verschwenkbar gelagert ist. Am oberen Ende ist ein Spannhebel 26 verschwenkbar gelagert, mit dem die Werkzeugspindel 16 bzw. ein daran festlegbares Spannelement axial verschiebbar ist, um ein Werkzeug am äußeren Ende der Werkzeugspindel 16 ohne Zuhilfenahme eines Werkzeuges spannen oder davon lösen zu können.

Die Werkzeugspindel 16 ist um ihre Längsachse 18 mit relativ hoher Frequenz (ca. 5.000 bis 20.000 Oszillationen pro Minute) und kleinem Verschwenkwinkel (etwa 0,5° bis 5°) verschwenkbar, wie durch den Doppelpfeil 17 angedeutet ist.

Zur Erzeugung dieser oszillierenden Antriebsbewegung ist ein Elektromotor 12 vorgesehen, der rechtwinklig zur Werkzeugspindel 16 im Gehäuse angeordnet ist und über eine Hydraulikeinrichtung 28 mit der Werkzeugspindel 16 gekoppelt ist. Bei dem Elektromotor 12 handelt es sich in bekannter Weise um einen Universalmotor, von dem in Fig. 1 zusätzlich der Lüfter 14 und der Kollektor 15 erkennbar sind und der mit seiner Motorwelle 13 am äußeren Ende mittels eines Lagers 22 gelagert ist und zwischen Lüfter 14 und Hydraulikeinrichtung 28 mittels eines weiteren Lagers 20 gelagert ist.

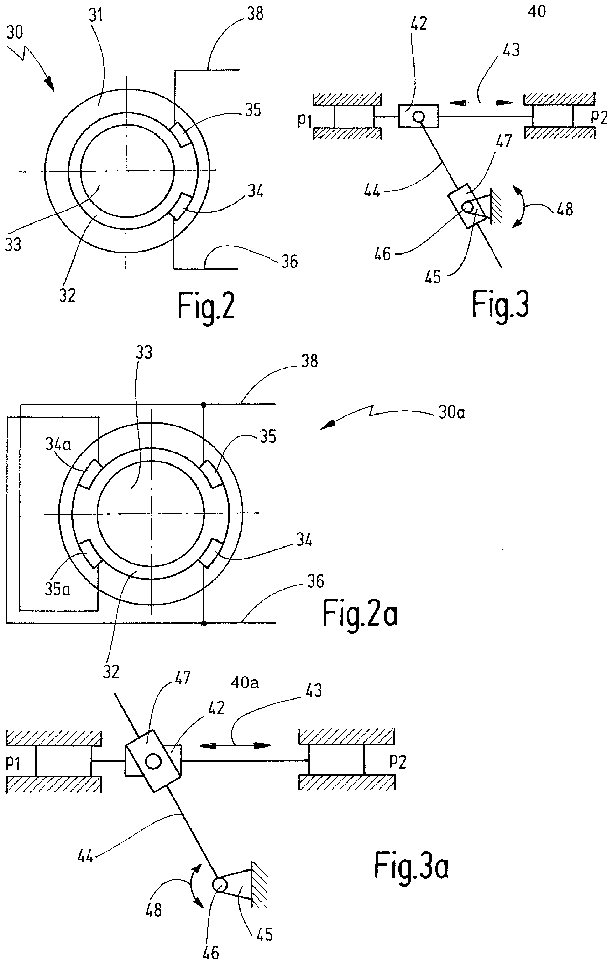

Weitere Einzelheiten, wie die Hydraulikeinrichtung 28 grundsätzlich aufgebaut sein kann, werden im Folgenden anhand der Fig. 2 bis 6 näher erläutert.

Grundsätzlich weist die Hydraulikeinrichtung einen Generatorteil auf, um aus der mechanischen Rotationsbewegung einer Antriebswelle oszillierende Fluidenergie eines Fluidmediums zu erzeugen. Ferner weist die Hydraulikeinrichtung 28 einen motorischen Teil auf, mittels dessen die oszillierende Fluidenergie in eine oszillierende Antriebsbewegung der Werkzeugspindel 16 umgesetzt wird.

Für die Umsetzung der oszillierenden Fluidenergie in eine oszillierende Antriebsbewegung der Werkzeugspindel 16, also für den Hydraulikmotor, gibt es grundsätzlich eine Reihe von Möglichkeiten, von denen erfindungsgemäß eine Ausführung als Schwenkflügelmotor besonders bevorzugt ist.

Eine erste Ausführung ist in Fig. 2 dargestellt. Hierbei handelt es sich um einen Drehflügel-Schwenkflügelmotor (kurz Drehflügelmotor) 30. Die einfachste Ausführung ist die Ausführung gemäß Fig. 2 als Zweikammer-Drehflügelmotor.

Der besondere Vorteil eines Drehflügelmotors 30 besteht darin, dass kein Getriebe erforderlich ist.

Der Drehflügelmotor 30 gemäß Fig. 2 weist ein zylindrisches Gehäuse 31 auf, in dem an einer Welle 33 ein Schwenkflügel 32 zwischen zwei Endstellungen verschwenkbar ist. Der Schwenkflügel 32 ist mit zwei Fluidräumen 34, 35 gekoppelt, die über Fluidanschlüsse 36, 38 mit oszillierender Fluidenergie versorgt werden.

Wird nun oszillierende Fluidenergie derart an die Fluidanschlüsse 36, 38 angekoppelt, dass zunächst der Druck im Fluidraum 35 steigt und gleichzeitig der Fluiddruck im Fluidraum 34 in entsprechender Weise abnimmt, so bewegt sich der Schwenkflügel 32 in Fig. 2 nach dem Uhrzeigersinn.

Kehren sich dagegen bei der Oszillation die Druckverhältnisse in den Fluidanschlüssen 36, 38 um, besteht also ein Überdruck im Fluidraum 34 und ein entsprechender Unterdruck im Fluidraum 35, so ergibt sich eine Bewegung des Schwenkflügels 32 im Gegenuhrzeigersinn.

Wird oszillierende Fluidenergie an die Fluidanschlüsse 36, 38 angelegt, so ergibt sich also eine hin und her oszillierende Schwenkbewegung der Welle 33 um ihre Längsachse. Mittels eines solchen Drehflügelmotors 30 kann also somit die oszillierende Fluidenergie unmittelbar in eine oszillierende Antriebsbewegung der Werkzeugspindel 16 umgesetzt werden, wenn diese mit der Welle 33 gekoppelt wird.

Eine erfindungsgemäß bevorzugte Ausführung als Mehrkammer-Drehflügelmotor 30a (vgl. Fig. 2a) etwa mit vier oder mehr Kammern 34, 34a, 35, 35a erlaubt einen symmetrischen Aufbau, wodurch einseitige Lagerbelastungen vermieden werden können.

Eine weitere Möglichkeit zur Umsetzung von oszillierender Fluidenergie in eine oszillierende Antriebsbewegung der Werkzeugspindel 16 besteht in der Verwendung eines Linearkolbens, Längskolbens oder eines Doppelplungerzylinders, jeweils in Verbindung mit einem Getriebe.

In Fig. 3 ist eine erste Ausführung mit einem doppelt wirkenden Fluidzylinders 42 dargestellt, dessen in Längsrichtung hin und her oszillierende Bewegung über ein Getriebe in eine Drehoszillationsbewegung der Werkzeugspindel 16 umgesetzt wird. Eine derartige Anaordnung wird als Schubschleife 40 bezeichnet.

Der doppelt wirkende Fluidzylinder 42, der in Richtung des Doppelpfeiles 43 hin und her oszillierend antreibbar ist, ist mit einer Schubstange 44 gelenkig gekoppelt. Die Schubstange 44 ist gleitend in einem Gleitlager 47 geführt, das an einem Lager 45 ortsfest, jedoch verschwenkbar gehalten ist. Bewegt sich der Fluidzylinder 42 infolge von alternierender Fluidenergie in Richtung des Pfeiles 43 hin und her, so führt dies zu einer hin und her oszillierenden Bewegung des Gleitlagers 47 um das Lager 45, wie durch den Doppelpfeil 48 dargestellt ist. Wird am Lager 45 eine Befestigung 46 für die Werkzeugspindel 16 vorgesehen, so ergibt sich die gewünschte oszillierende Antriebsbewegung der Werkzeugspindel 16 um ihre Längsachse.

Vorteilhafter ist jedoch eine abgewandelte Ausführung einer Schubschleife, die in Fig. 3a dargestellt ist und insgesamt mit Ziffer 40a bezeichnet ist. Hierbei befindet sich das Gleitlager 47 unmittelbar am Fluidzylinder 42, so dass die Werkzeugspindel direkt von der Schwinge oder Schubstange 44 angetrieben werden kann und nicht mit einem Gleitlager kombiniert werden muss.

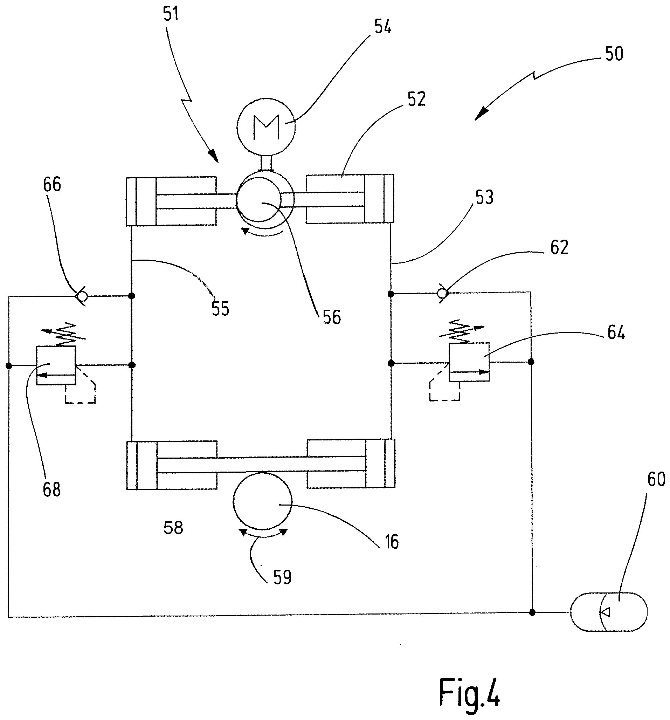

In Fig. 4 ist der grundsätzliche Aufbau einer Hydraulikeinrichtung 50 mit Hydraulikgenerator 51 zur Erzeugung von oszillierender Fluidenergie und Hydraulikmotor 58 zur Umsetzung der oszillierenden Fluidenergie in eine oszillierende Antriebsbewegung der Werkzeugspindel 16 dargestellt.

Hierbei weist der Hydraulikgenerator 51 einen Doppelkolben 52 auf, der von einem Motor 54 über einen Pleuelantrieb oder Exzentertrieb 56 hin und her gehend angetrieben ist. Der Doppelkolben 52 ist in einem zugeordneten Zylinder hin und her bewegbar, an dessen beiden Enden jeweils eine Fluidleitung 53 bzw. 55 angeschlossen ist. Wird der Motor 54 rotierend angetrieben, so ergibt sich in den beiden Fluidleitungen 53, 55 somit ein oszillierender Fluidstrom, der zur Umsetzung in eine oszillierende Antriebsbewegung der Werkzeugspindel 16 etwa mithilfe eines Drehflügelmotors 30 genutzt werden kann.

Die beiden Fluidleitungen 53, 55 stehen somit mit einem Hydraulikmotor 58 in Verbindung, der lediglich rein schematisch dargestellt ist und der die Umsetzung in die hin und her oszillierende Antriebsbewegung der Werkzeugspindel 16 bewirkt, wie durch den Doppelpfeil 59 angedeutet ist. Wenngleich in Fig. 4 schematisch nur eine Umsetzung mit einem Doppelkolben über Zahnstange und Ritzel gezeigt ist, versteht es sich, dass grundsätzlich die Umsetzung mittels eines Drehflügelmotors oder einer Schubschleife bevorzugt ist.

Die Hydraulikeinrichtung 50 ist grundsätzlich als geschlossenes Hydrauliksystem ausgestaltet. Hierzu ist rein schematisch zusätzlich eine Kopplung der beiden Fluidleitungen 53, 55 über Rückschlagventile 62, 66 mit einem Druckspeicher 60 angedeutet. Die Rückschlagventile 62, 66 sind wichtig für den Druckaufbau im System, in dem durch Nachsaugung ein Unterdruck im System (bei Bewegungsbeginn oder durch Wärmeausdehnung) verhindert wird. Die Druckbegrenzungsventile 64, 68 sind optional. Sie sollen einen zu hohen Druck und damit Schäden vermeiden. Bei geeigneter Auslegung kann darauf verzichtet werden, z.B. wenn die Leistung des Antriebsmotors nur den Aufbau begrenzter Drücke erlaubt,

Auf die Darstellung weiterer Maßnahmen, etwa zur Kompensation einer Drift der Werkzeugspindel 16 aus ihrer Mittellage, wurde hier verzichtet.

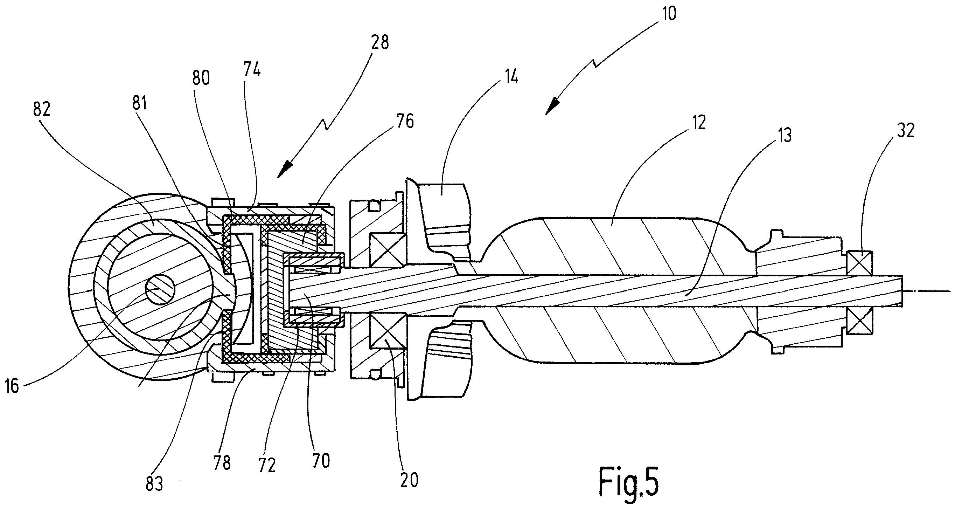

Anhand von Fig. 5 wird nun ein möglicher Aufbau der Werkzeugmaschine 10 näher erläutert. Fig. 5 zeigt einen Längsschnitt durch die Werkzeugmaschine 10 gemäß Fig. 1.

Wie bereits erwähnt, handelt es sich bei dem Antriebsmotor 12 um einen Elektromotor in Form eines Universalmotors. Die Hydraulikeinrichtung 28 umfasst eine Doppelplungerpumpe 74, die vom Antriebsmotor 12 über einen Exzenter 70 angetrieben wird und die eine oszillierende Fluidenergie erzeugt. Die oszillierende Fluidenergie wird von einem Drehflügelmotor 82 unmittelbar in eine oszillierende Antriebsbewegung der Werkzeugspindel 16 umgesetzt.

Der Exzenter 70 ist am Ende der Motorwelle 13 ausgebildet und treibt über ein Exzenterlager 72 einen Doppelplunger 76 der Doppelplungerpumpe 74 oszillierend an. Der Doppelplunger 76 umschließt das Exzenterlager 72 von beiden Seiten her und ist somit im Querschnitt annähernd U-förmig ausgebildet. Es ergibt sich somit eine symmetrische Anordnung.

Durch die oszillierende Bewegung des Doppelplungers 76 verdrängt dieser in den zugeordneten Fluidräumen, in die dieser mit seinen beiden Enden eintaucht, Fluid 80, so dass sich an den beiden Ausgängen 81, 83 oszillierende Fluidenergie einstellt, jeweils mit einem Überdruck an einem der beiden Ausgänge 81, 83 und einem entsprechenden Unterdruck am jeweils anderen der beiden Ausgänge 81, 83. Die Ausgänge 81, 83 sind nun unmittelbar mit den jeweiligen Arbeitsräumen eines Drehflügelmotors 82 gekoppelt, der unmittelbar die Werkzeugspindel 16 antreibt. Die oszillierende Fluidenergie der Doppelplungerpumpe 74 wird somit unmittelbar in eine oszillierende Antriebsbewegung der Werkzeugspindel 16 um ihre Längsachse 18 umgesetzt.

Dabei bewegt sich der Doppelplunger 76 jeweils in entgegengesetzter Richtung wie die Werkzeugspindel 16. Somit kann der Doppelplunger 76 unmittelbar als Ausgleichsgewicht vorgesehen und entsprechend dimensioniert werden.

Während der Drehflügelmotor 82 in Fig. 5 nur als Zweikammermotor aus Vereinfachungsgründen dargestellt ist, wird eine Ausführung mit vier oder acht Kammern bevorzugt (vgl. Fig. 2a), da so ein symmetrischer Aufbau erreicht werden kann und eine einseitige Lagerbelastung vermieden werden kann.

Ein besonderer Vorteil der vorstehend beschriebenen Anordnung besteht darin, dass durch die jeweilige Dimensionierung der Hydraulikeinrichtung, also durch die Dimensionierung des Hydraulikgenerators einerseits und durch die Dimensionierung des Hydraulikmotors andererseits, die wesentlichen Parameter des oszillierenden Antriebes angepasst werden können, also insbesondere der Schwingwinkel, die Winkelgeschwindigkeit, die Winkelbeschleunigung und das erzeugte Drehmoment. Insbesondere lassen sich hohe Drehmomente relativ verschleißarm und vibrationsarm erzielen.

## Patentansprüche

1. Oszillierend antreibbare Werkzeugmaschine, mit einem Antriebsmotor (12, 54), mit einer um ihre Längsachse (18) schwenkbar gelagerten Werkzeugspindel (16), und mit einer Hydraulikeinrichtung (28, 50), über die der Antriebsmotor (12, 54) mit der Werkzeugspindel (16) zu deren drehoszillierenden Antrieb um ihre Längsachse (18) gekoppelt ist, mit einem Hydraulikgenerator (51, 74) zur Erzeugung eines oszillierenden Fluidstroms, und mit einem Hydraulikmotor (30, 30a, 58, 82) zur Umsetzung von Hydraulikenergie in eine oszillierende Antriebsbewegung der Werkzeugspindel (16), wobei der Hydraulikgenerator (51, 74) ein oszillierend angetriebenes Arbeitselement (76) aufweist, das vom Antriebsmotor (12, 54) angetrieben ist, **dadurch gekennzeichnet, dass** das Arbeitselement (76) vom Antriebsmotor (12, 54) derart angetrieben ist, dass sich das Arbeitselement (76) als Ausgleichsgewicht gegenläufig zur Werkzeugspindel (16) bewegt, oder dass ein Ausgleichsgewicht vorgesehen ist, das gegenläufig zum Arbeitselement (76) angetrieben ist, wobei ein gesonderter Antrieb für das Ausgleichsgewicht vorgesehen ist.

2. Werkzeugmaschine nach Anspruch 1, **dadurch gekennzeichnet, dass** der Hydraulikgenerator (51, 74) eine Verdrängerpumpe aufweist.

3. Werkzeugmaschine nach Anspruch 1 oder 2, **dadurch gekennzeichnet, dass** der Antriebsmotor als Elektromotor (12) ausgebildet ist, dessen Motorwelle (13) über einen Exzenter (70) mit dem Hydraulikgenerator (74) zur Erzeugung eines oszillierenden Fluidstroms gekoppelt ist.

4. Werkzeugmaschine nach einem der Ansprüche 1 bis 3, **dadurch gekennzeichnet, dass** der Hydraulikgenerator (74) als Plungerpumpe oder als Kolbenpumpe ausgebildet ist.

5. Werkzeugmaschine nach einem der Ansprüche 1 bis 4, **dadurch gekennzeichnet, dass** der Hydraulikgenerator (74) als Doppelplungerpumpe oder als Doppelkolbenpumpe ausgebildet ist.

6. Werkzeugmaschine nach einem der Ansprüche 1 bis 5, **dadurch gekennzeichnet, dass** der Hydraulikmotor als Drehflügelmotor (30, 30a, 82) ausgebildet ist, der mit der Werkzeugspindel (16) zu deren oszillierendem Antrieb gekoppelt ist.

7. Werkzeugmaschine nach Anspruch 6, **dadurch gekennzeichnet, dass** der Drehflügelmotor (30a) als Mehrkammer-Schwenkmotor mit mindestens vier Kammern (34, 34a, 35, 35a) ausgebildet ist.

8. Werkzeugmaschine nach einem der Ansprüche 1 bis 5, **dadurch gekennzeichnet, dass** die Werkzeugspindel (16) über ein Getriebe, vorzugsweise in Form einer Schubschleife (40, 40a), mittels eines doppelt wirkenden Zylinders (42) vom oszillierenden Fluidstrom angetrieben ist.

9. Werkzeugmaschine nach einem der vorhergehenden Ansprüche, **dadurch gekennzeichnet, dass** das Arbeitselement (76) als Doppelplunger oder als Doppelkolben ausgebildet ist.

10. Werkzeugmaschine nach einem der Ansprüche 1 bis 9, **dadurch gekennzeichnet, dass** das Ausgleichsgewicht, das gegenläufig zum Arbeitselement (76) angetrieben ist von einem weiteren Hydraulikgenerator mit oszillierender Fluidenergie versorgt wird.

11. Werkzeugmaschine nach einem der vorhergehenden Ansprüche, **dadurch gekennzeichnet, dass** die Hydraulikeinrichtung (28, 50) einen geschlossenen Hydraulikkreis aufweist.

## Claims

1. Oscillatingly drivable machine tool, comprising a drive motor (12, 54), with a tool spindle (16) pivotally mounted about its longitudinal axis (18), and comprising a hydraulic device (28, 50), via which the drive motor (12, 54) is coupled to the tool spindle (16) for its rotational oscillating drive about its longitudinal axis (18),
comprising a hydraulic generator (51, 74) for generating an oscillating fluid flow, and comprising a hydraulic motor (30, 30a, 58, 82) for converting hydraulic energy into an oscillating driving movement of the tool spindle (16), wherein the hydraulic generator (51, 74) comprises an oscillatingly driven working element (76) which is driven by the drive motor (12, 54),
**characterized in that** the working element (76) is driven by the drive motor (12, 54) in such a way that the working element (76) moves as a counterweight in the opposite direction to the tool spindle (16),
or **in that** a counterweight is provided which is driven in the opposite direction to the working element (76), wherein a separate drive is provided for the counterweight.

2. Machine tool according to claim 1, **characterized in that** the hydraulic generator (51, 74) comprises a positive displacement pump.

3. Machine tool according to claim 1 or 2, **characterized in that** the drive motor is configured as an electric motor (12), the motor shaft (13) of which is coupled to the hydraulic generator (74) via an eccentric (70) for generating an oscillating fluid flow.

4. Machine tool according to one of claims 1 to 3, **characterized in that** the hydraulic generator (74) is configured as a plunger pump or as a piston pump.

5. Machine tool according to one of the claims 1 to 4, **characterized in that** the hydraulic generator (74) is configured as a double plunger pump or as a double piston pump.

6. Machine tool according to any one of claims 1 to 5, **characterized in that** the hydraulic motor is configured as a rotary vane motor (30, 30a, 82) which is coupled to the tool spindle (16) for the oscillating drive thereof.

7. Machine tool according to claim 6, **characterized in that** the rotary vane motor (30a) is configured as a multi-chamber swivel motor with at least four chambers (34, 34a, 35, 35a).

8. Machine tool according to one of the claims 1 to 5, **characterized in that** the tool spindle (16) is driven by the oscillating fluid flow via a transmission, preferably in the form of a thrust loop (40, 40a), by means of a double-acting cylinder (42).

9. Machine tool according to one of the preceding claims, **characterized in that** the working element (76) is configured as a double plunger or as a double piston.

10. Machine tool according to one of the claims 1 to 9, **characterized in that** the counterweight, which is driven in the opposite direction to the working element (76), is supplied with oscillating fluid energy by a further hydraulic generator.

11. Machine tool according to one of the preceding claims, **characterized in that** the hydraulic device (28, 50) comprises a closed hydraulic circuit.

## Revendications

1. Machine-outil pouvant être entraînée en oscillation, avec un moteur d'entraînement (12, 54), avec une broche porte-outil (16) montée de manière à pouvoir pivoter autour de son axe longitudinal (18) et avec un dispositif hydraulique (28, 50), par l'intermédiaire duquel le moteur d'entraînement (12, 54) est couplé à la broche porte-outil (16) aux fins de son entraînement en oscillation par rotation autour de son axe longitudinal (18), avec un générateur hydraulique (51, 74) pour générer un flux de fluide oscillant et avec un moteur hydraulique (30, 30a, 58, 82) pour transformer de l'énergie hydraulique en un déplacement d'entraînement oscillant de la broche porte-outil (16), dans laquelle le générateur hydraulique (51, 74) présente un élément de travail (76) entraîné en oscillation, qui est entraîné par le moteur d'entraînement (12, 54),
**caractérisée en ce que** l'élément de travail (76) est entraîné par le moteur d'entraînement (12, 54) de telle manière que l'élément de travail (76) se déplace en tant que poids de compensation en sens inverse par rapport à la broche porte-outil (16),
ou qu'un poids de compensation est prévu, lequel est entraîné en sens inverse par rapport à l'élément de travail (76), dans laquelle un entraînement séparé est prévu pour le poids de compensation.

2. Machine-outil selon la revendication 1, **caractérisée en ce que** le générateur hydraulique (51, 74) présente une pompe volumétrique.

3. Machine-outil selon la revendication 1 ou 2, **caractérisée en ce que** le moteur d'entraînement est réalisé en tant que moteur électrique (12) dont l'arbre de moteur (13) est couplé par l'intermédiaire d'un excentrique (70) au générateur hydraulique (74) pour produire un flux de fluide oscillant.

4. Machine-outil selon l'une quelconque des revendications 1 à 3, **caractérisée en ce que** le générateur hydraulique (74) est réalisé en tant que pompe à piston plongeur ou en tant que pompe à piston.

5. Machine-outil selon l'une quelconque des revendications 1 à 4, **caractérisée en ce que** le générateur hydraulique (74) est réalisé en tant que pompe à double piston plongeur ou en tant que pompe à double piston.

6. Machine-outil selon l'une quelconque des revendications 1 à 5, **caractérisée en ce que** le moteur hydraulique est réalisé en tant que moteur à ailes rotatives (30, 30a, 82), qui est couplé à la broche-porte-outil (16) aux fins de son entraînement en oscillation.

7. Machine-outil selon la revendication 6, **caractérisée en ce que** le moteur à ailes rotatives (30a) est réalisé en tant que moteur pivotant à chambres multiples avec au moins quatre chambres (34, 34a, 35, 35a).

8. Machine-outil selon l'une quelconque des revendications 1 à 5, **caractérisée en ce que** la broche porte-outil (16) est entraînée par le flux de fluide oscillant au moyen d'un cylindre (42) à double action par l'intermédiaire d'un engrenage, de préférence sous la forme d'une boucle de poussée (40, 40a).

9. Machine-outil selon l'une quelconque des revendications précédentes, **caractérisée en ce que** l'élément de travail (76) est réalisé en tant que double piston plongeur ou en tant que double piston.

10. Machine-outil selon l'une quelconque des revendications 1 à 9, **caractérisée en ce que** le poids de compensation, qui est entraîné en sens inverse par rapport à l'élément de travail (76), est alimenté en énergie de fluide oscillante par un autre générateur hydraulique.

11. Machine-outil selon l'une quelconque des revendications précédentes, **caractérisée en ce que** le dispositif hydraulique (28, 50) présente un circuit hydraulique fermé.
